(19) Europäisches Patentamt
European Patent Office
Office européen des brevets

(11) **EP 2 599 053 B1**

(12) **FASCICULE DE BREVET EUROPEEN**

(45) Date de publication et mention
de la délivrance du brevet:
**14.06.2017 Bulletin 2017/24**

(21) Numéro de dépôt: **11755115.0**

(22) Date de dépôt: **27.07.2011**

(51) Int Cl.:
*G06T 1/60* *(2006.01)*     *G06T 11/00* *(2006.01)*

(86) Numéro de dépôt international:
**PCT/IB2011/001730**

(87) Numéro de publication internationale:
**WO 2012/014045 (02.02.2012 Gazette 2012/05)**

(54) **DISPOSITIF ET PROCÉDÉ DE GÉNÉRATION D'IMAGES PROCÉDURALES AVEC CACHE**

VORRICHTUNG UND VERFAHREN ZUR ERZEUGUNG VON VERFAHRENSORIENTIERTEN BILDERN MIT EINEM ZWISCHENSPEICHER

DEVICE AND METHOD FOR GENERATING PROCEDURAL IMAGES WITH A CACHE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.08.2010 US 369803 P**
**29.07.2010 FR 1003201**

(43) Date de publication de la demande:
**05.06.2013 Bulletin 2013/23**

(73) Titulaire: **ALLEGORITHMIC**
**63000 Clermont-Ferrand (FR)**

(72) Inventeur: **SOUM, Christophe**
**F-63000 Clermont-Ferrand (FR)**

(74) Mandataire: **Gabriel, Franck**
**TWENANS**
**29 Rue des Chandiots**
**63100 Clermont-Ferrand (FR)**

(56) Documents cités:
- **ALLEGORITHMIC: "Substance: Unleashing online gaming with descriptive textures", INTERNET CITATION, [Online] 31 mars 2009 (2009-03-31), pages 1-10, XP002662009, Extrait de l'Internet: URL:http://download.allegorithmic.com/documents/brochures/substance_air_white_paper_march09.pdf>**
- **LI WANG ET AL: "Reuse-Aware Modulo Scheduling for Stream Processors", 2010 DESIGN, AUTOMATION & TEST IN EUROPE CONFERENCE & EXHIBITION (DATE 2010), DRESDEN, GERMANY, 12 mars 2010 (2010-03-12), page 6 PP., XP002668458,**
- **YOONSEO CHOI ET AL: "Stream compilation for real-time embedded multicore systems", 2009 7TH ANNUAL IEEE/ACM INTERNATIONAL SYMPOSIUM ON CODE GENERATION AND OPTIMIZATION (CGO 2009) IEEE PISCATAWAY, NJ, USA, 2009, pages 210-220, XP002668459, ISBN: 978-0-7695-3576-0**
- **BUCK I ET AL: "Brook for GPUs: Stream Computing on Graphics Hardware", ACM TRANSACTIONS ON GRAPHICS: TOG, ACM, US, 8 août 2004 (2004-08-08), pages 777-786, XP002518743, ISSN: 0730-0301, DOI: 10.1145/1015706.1015800**

**EP 2 599 053 B1**

**Description**

## DOMAINE TECHNIQUE DE L'INVENTION

La présente invention concerne un moteur de génération d'images susceptible de générer des images pour une application hôte à partir de données procédurales sous forme de graphes séquentiels comportant des noeuds simples, des noeuds de résultats intermédiaires et des noeuds de résultats finaux. Elle concerne également ment un procédé de génération d'images correspondant.

## ETAT DE LA TECHNIQUE ANTERIEURE

De nombreuses applications graphiques sont amenées à manier des quantités significatives de données consommant une place importante en mémoire et dont la manipulation nécessite un grand nombre de calculs complexes. De plus, certaines catégories d'applications graphiques interactives doivent autant que possible minimiser leur temps de réponse afin de fournir une expérience utilisateur satisfaisante : jeux vidéo, simulateurs d'entraînement, logiciels d'édition ou de composition vidéo. Ces applications dédient une part importante des ressources à la manipulation d'images appelées « textures », qui représentent par exemple l'aspect de surface d'un objet, un décor de fond, ou bien des masques de composition. Les textures sont non seulement utilisées pour stocker des informations de couleurs, mais également tout autre paramètre utile à l'application. Dans un jeu vidéo les textures stockent typiquement les couleurs, les petits reliefs de surface, ainsi que les coefficients de réflexion des matériaux.

L'édition, le stockage et l'affichage de ces textures sont des problèmes clés des applications graphiques. Généralement, les textures sont peintes par des infographistes, parfois à partir de photographies. Une fois peinte, la texture a une résolution figée et il est très difficile de l'adapter à un autre contexte. Les applications utilisant de plus en plus de textures, il devient très coûteux de peindre à la main suffisamment de textures différentes et il n'est pas rare d'observer des répétitions à l'écran. De plus, les textures sont stockées sous forme de grilles de pixels (points de couleur), que nous appellerons « bitmaps » par la suite. Même après compression, il est très coûteux de stocker ces informations sur un média de masse type DVD ou disque dur, et très lent de les transférer via un réseau.

Bien entendu, certaines techniques ont été proposées pour répondre à ces difficultés, et en particulier la notion de « texture procédurale ». Selon ce concept, l'image est le résultat d'un calcul plutôt que peinte à la main. Sous certaines conditions, le calcul de l'image peut être effectué au dernier moment, juste avant l'affichage, limitant ainsi le besoin de stocker l'image entière. Il est également aisé d'introduire des variations dans les textures procédurales, évitant ainsi les répétitions. Cependant, les textures procédurales ne peuvent pas être facilement créées et manipulées par les infographistes, et leur utilisation reste limitée à quelques cas particuliers de matériaux. Malgré les nombreuses tentatives, aucun système n'a su offrir un outil complet permettant l'édition, la manipulation et l'affichage efficaces de textures procédurales.

Le document "Substance: Unleashing online gaming with descriptive textures", White Paper, Allegorithmic, mars 2009, décrit un système de génération de textures procédurales selon la préambule de la revendication 1.

Pour pallier ces différents inconvénients, l'invention prévoit différents moyens techniques.

## EXPOSE DE L'INVENTION

Tout d'abord, un premier objet de l'invention consiste à prévoir un dispositif permettant d'optimiser la génération d'images et/ou de textures.

Un autre objet de l'invention consiste à prévoir un procédé permettant d'optimiser la génération d'images et/ou de textures.

Encore un autre objet de l'invention consiste à prévoir un procédé permettant de réutiliser et/ou de conserver des portions de calculs pour la génération de plusieurs séries d'images ou textures procédurales.

Encore un autre objet de l'invention consiste à prévoir un procédé de rendu de textures permettant un fonctionnement pour des applications en temps réel.

Pour ce faire, l'invention prévoit un moteur de génération d'images susceptible de générer des images pour une application hôte à partir de données procédurales sous forme de graphes séquentiels selon la revendication 1.

Grâce à ce type de dispositif, la vitesse de génération ou de rendu des images est fortement augmentée, rendant possible la réalisation de certains montages en temps réel, sans interruption ou encore avec des interruptions dont la durée est réduite.

Les résultats intermédiaires conservés sont utilisés pour tous les calculs ultérieurs de textures résultats pour lesquels ces résultats intermédiaires sont applicables. Les résultats non conservés sont recalculés lorsque nécessaire.

Dans un mode de réalisation avantageux, le graphe est sous forme de liste avec indications des résultats intermédiaires prérequis à une étape donnée.

L'invention prévoit également un procédé de génération d'images selon la revendication 3.

La solution selon l'invention est basée sur le fait que les infographistes décrivent des textures à l'aide d'un outil dédié qui permet un fort contrôle sur l'aspect final des images. Cet outil encourage la réutilisation de morceaux d'images existants, et permet de générer une infinité de variations d'une texture de base. L'outil ne mémorise pas l'image finale, mais plutôt la description de l'image, c'est-à-dire les étapes successives qui permettent de la calculer. Dans l'immense majorité des cas, cette description est de taille très inférieure à l'image sous forme « bitmap ». De plus, la technologie de l'invention a été conçue pour permettre une génération très efficace des images sous forme « bitmap » à partir de leurs descriptions. Les descriptions issues de l'éditeur sont préparées pour être générées à l'exécution. Les applications n'ont besoin de connaître que ces descriptions retravaillées. Lorsque l'application hôte souhaite utiliser une texture, elle demande au composant de génération appelé « engine », de convertir la description retravaillée en image « bitmap ». Par la suite l'image « bitmap » est utilisée comme une image classique.

Ainsi, la technologie de l'invention fait appel à la génération des images sous forme de graphe. Chaque noeud du graphe applique une opération sur une ou plusieurs images d'entrée (flou, déformation, changement colorimétrique, etc.). Chaque noeud possède également des paramètres manipulables par l'utilisateur, ou spécifiables via des expressions arithmétiques à partir d'autres paramètres. Certains noeuds génèrent directement des images à partir des paramètres, sans demander d'autre image en entrée. L'infographiste décrit une image résultat à l'aide de ce graphe, via un outil logiciel dédié.

Dans un mode de réalisation avantageux, une modification de la liste L0 de rendus entraine un nouveau calcul des poids des résultats intermédiaires.

Selon une variante avantageuse, le module de calcul de poids des résultats intermédiaires effectue un tri de poids par ordre de poids croissants. Ce mode est intéressant dans le cas où le résultat intermédiaire est conservé si le poids a une valeur élevée.

Le résultat intermédiaire nouvellement obtenu avant l'étape de suppression de données est de préférence pris en compte dans l'étape d'identification du résultat intermédiaire de poids le plus faible.

Selon un autre mode de réalisation avantageux, le module de calcul de résultats intermédiaires détermine les résultats intermédiaires en fonction de la liste L0 de rendus.

Selon diverse variantes de réalisation, le module de calcul de poids effectue les calculs de poids en considérant la taille occupée par l'image résultat en mémoire, et/ou la quantité de calculs requis pour calculer ledit résultat intermédiaire et/ou la distance temporelle avant réutilisation dudit résultat intermédiaire.

Selon encore d'autres variantes de réalisation, dans l'étape de suppression de données correspondant au résultat intermédiaire, le moteur de génération d'images effectue la suppression de données de l'image du résultat intermédiaire, et/ou de données parmi les listes L1, L2 et L3.

Selon encore une autre variante avantageuse, une modification du niveau de seuil minimum de mémoire disponible entraine un nouveau calcul de poids.

## DESCRIPTION DES FIGURES

Tous les détails de réalisation sont donnés dans la description qui suit, complétée par les figures 1 à 12, présentées uniquement à des fins d'exemples non limitatifs, et dans lesquelles:

- les figures 1 à 6, ainsi que la figure 8 sont des représentations schématiques d'exemples de graphes de génération d'images selon l'invention;
- les figures 7 et 9 représentent schématiquement une scène dans laquelle des images sont à générer pour une application hôte;
- la figure 10 représente schématiquement un moteur de rendu selon l'invention ;
- les figures 11 et 12 sont des organigrammes fonctionnels présentant certaines étapes clé du procédé de génération d'image selon l'invention.

## DESCRIPTION DETAILLEE DE L'INVENTION

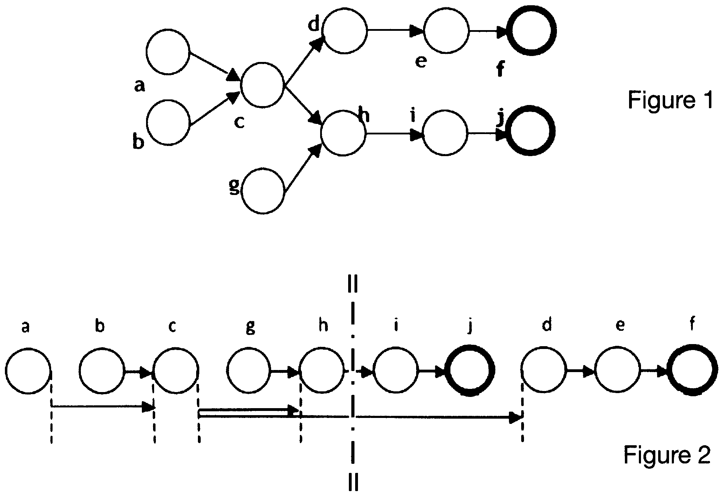

Un exemple de graphe de génération est illustré à la figure 1. Les noeuds [a,b,c,d,e,g,h,i] produisent des résultats intermédiaires alors que les noeuds [f,j] sont les calculs produisant les images résultats désirées par l'utilisateur. Afin d'obtenir les images résultats, il faut traverser tous les autres noeuds, en respectant l'ordre défini par l'orientation des arêtes du graphe. Un noeud ne pouvant être calculé avant que toutes ses entrées ne soient disponibles, deux sous-branches indépendantes peuvent être évaluées en parallèle mais doivent être synchronisées lorsqu'elles rejoignent un même noeud.

Chaque calcul est réalisé dans un temps qui lui est propre, dépendant de sa complexité et du volume des données à traiter. Chaque noeud produit une image, qui requiert une certaine quantité de mémoire pour sa sauvegarde. Cette quantité de mémoire est dépendante de la taille de l'image et propre à chaque noeud. Par exemple, pour un noeud donné, traiter une image B deux fois plus haute et large qu'une image A entraînera le traitement de quatre fois plus de données, et donc potentiellement un temps d'exécution quatre fois supérieur et un espace mémoire quatre fois plus grand pour stocker le résultat.

Afin de réaliser le calcul d'un noeud il faut disposer en mémoire des images utilisées en entrée. Supposons par exemple que le graphe de la figure 1 est évalué en séquence, noeud après noeud, dans l'ordre montré figure 2.

Les noeuds sont calculés de gauche à droite. Les flèches indiquent les résultats intermédiaires qui doivent être stockés. La ligne en pointillé indique une étape de calcul particulière. A cette étape les résultats intermédiaires des noeuds [h] et [c] sont stockés en mémoire. En effet, ces résultats seront utilisés respectivement par les noeuds [i] et [d], évalués par la suite. Ceci signifie qu'ils seront utiles plus tard dans la même séquence de calcul, ou bien lors d'une prochaine séquence de calcul (dans cet exemple, on peut imaginer calculer l'image [j] seule, puis dans un second temps l'image [f]).

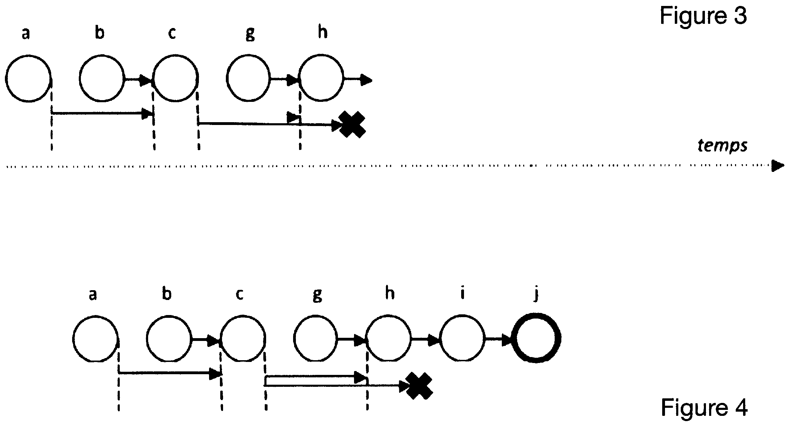

Il est donc nécessaire de maintenir en mémoire un ensemble de résultats intermédiaires. Le nombre d'images intermédiaires à stocker dépend de la complexité du graphe. Cependant, la mémoire étant une ressource finie, il est fréquent que l'application hôte ne confie qu'une quantité de mémoire limitée au moteur de rendu d'images procédurales. Il faudra donc parfois effacer un (ou des) résultat(s) intermédiaire(s) afin de respecter le « budget mémoire » imposé par l'application hôte au moteur de rendu. Dans ce cas, si un résultat intermédiaire effacé est à nouveau utilisé plus tard dans le processus de génération, il faudra le régénérer à partir des résultats intermédiaires conservés en mémoire, ou le cas échéant, à partir du début de la branche du graphe menant à ce résultat. Ainsi, pour l'exemple de la figure 2, supposons que la mémoire disponible ne permette pas de stocker les résultats intermédiaires des noeuds [c] et [h] simultanément. Lors du calcul du noeud [h], le résultat du noeud [c] devra être supprimé, comme montré à la figure 3.

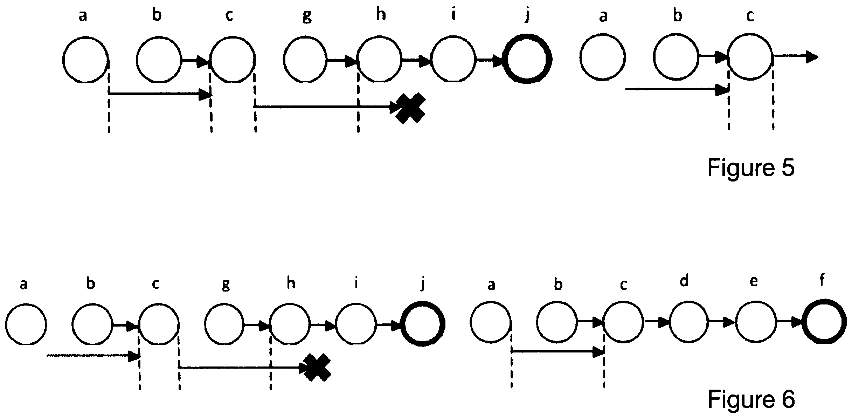

A la figure 4, on voit que la génération se poursuit alors jusqu'au noeud [j], le résultat de [c] étant inutile pour ces noeuds. A la figure 5, lorsque [c] est à nouveau nécessaire (en arrivant sur le noeud [d]), l'algorithme le régénère à partir du début du graphe. Puis la génération se termine (figure 6). A aucun moment les résultats intermédiaires [c] et [h] n'ont été présents simultanément en mémoire, réduisant l'espace nécessaire. En échange, les noeuds [a,b,c] ont été calculés deux fois. En fonction du budget mémoire imposé par l'application hôte, il est donc possible d'effectuer un compromis entre la quantité de mémoire occupée et le temps de calcul nécessaire pour générer toutes les sorties du graphe. Il est donc crucial de bien choisir quels résultats sont conservés en mémoire ou éliminés, afin de maximiser l'utilisation mémoire dans la limite du budget fixé sans avoir à répéter trop souvent des calculs déjà effectués au préalable. Cependant, une difficulté importante réside dans le fait que l'ordre des opérations n'est pas toujours connu à l'avance. En effet, pour le graphe de la figure 1, l'application hôte peut d'abord demander la génération de l'image [f] puis celle de l'image [j], ou à l'inverse demander d'abord la génération du résultat [j] puis la génération de [f]. Définir un choix optimal est donc rarement possible. De plus, comme évoqué précédemment, ce problème existe à la fois au sein de la génération d'un graphe - comme décrit ci-dessus - mais également temporellement, lorsque les images sont générées les unes après les autres, à la demande de l'utilisateur. Cette problématique, dite de « streaming », est décrite plus en détail ci-dessous.

La technologie de l'invention permet le « streaming » des images résultats, lorsque celles-ci sont utilisées comme textures (images appliquées sur de la géométrie) dans une application graphique. Le « streaming » permet de générer les textures uniquement lorsqu'elles deviennent visibles à l'écran, selon les déplacements de l'utilisateur. Les textures qui ne sont plus visibles sont effacées de la mémoire afin de libérer de l'espace. Ceci permet de limiter la consommation mémoire aux seules textures nécessaires pour l'affichage du point de vue courant.

Typiquement, le moteur d'affichage maintient un ensemble de textures nécessaires à l'affichage du point de vue courant, et fait évoluer cet ensemble en fonction des déplacements de l'utilisateur, en y ajoutant les textures préalablement invisibles et qui sont devenues visibles, ou à l'inverse en en retirant les textures préalablement visibles et devenues invisibles. Le moteur d'affichage peut aussi anticiper ces changements à partir des déplacements de l'utilisateur afin que toutes les textures utiles soient présentes en mémoire avant de devenir visibles, afin de ne pas avoir de trop nombreuses images à charger dans un temps limité, ce qui entraînerait un ralentissement sensible de l'application. Le moteur d'affichage envoie typiquement trois types d'événements :

- une texture deviendra probablement visible dans T unités de temps ;
- une texture devient visible immédiatement (T=0) ;
- une texture n'est plus visible.

Les événements du premier type permettent d'anticiper les chargements avec une priorité qui dépend de T: Les demandes de chargement de textures sont ainsi stockées dans une liste de rendu ordonnée en fonction du temps T au-delà duquel chaque texture doit absolument être disponible.

Le « streaming » est une technologie répandue pour charger des textures stockées sous forme de bitmaps classiques. Cependant la technologie des textures procédurales présente des particularités qui peuvent être exploitées pour optimiser la génération des textures pendant le « streaming » : il est possible de conserver les résultats intermédiaires (images) internes au graphe et communs à plusieurs images résultats. Ceci évite leur recalcul et permet d'accélérer la génération. Ce problème est donc le même que celui évoqué précédemment pour un graphe complet : l'objectif est de garder en mémoire autant de résultats intermédiaires que possible tout en minimisant les calculs redondants.

De par les caractéristiques du processus de calcul des images procédurales via le graphe de génération, il est possible de conserver les résultats intermédiaires communs à plusieurs images résultats pour une génération plus rapide. Un des éléments de la solution consiste à garder autant de résultats que possible dans le budget mémoire imparti et à décider du meilleur candidat à l'effacement seulement lorsque c'est nécessaire.

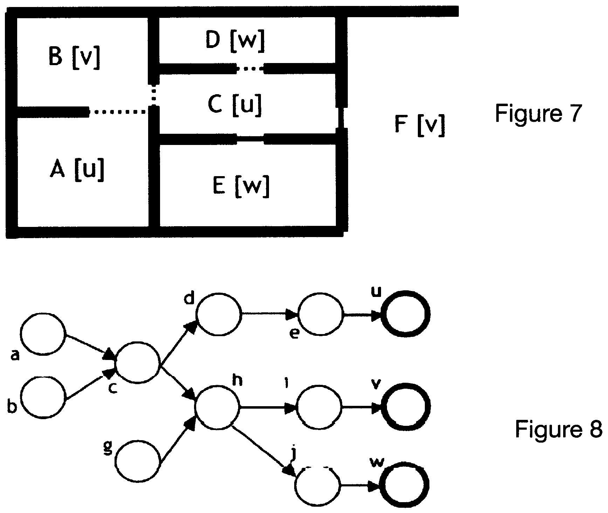

Pour l'exemple, considérons la scène de la figure 7 découpée en pièces (cellules). Chaque pièce utilise un sous-ensemble parmi trois textures différentes (images résultats) notées [u,v,w]. Le graphe de génération est donné à la figure 8. L'ordre de génération des textures sera ici déterminé par les déplacements de l'utilisateur dans la scène, c'est-à-dire l'ordre d'apparition des textures nécessaires pour afficher les points de vue successifs. De manière générale, cet ordre n'est pas connu à l'avance.

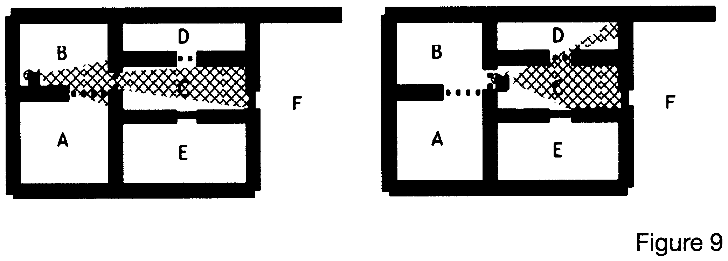

Comme il a été décrit précédemment, il est possible de conserver en mémoire le résultat des noeuds utilisés plusieurs fois dans un même calcul. Par exemple, pour le point de vue présenté à la figure 9 à gauche, les pièces A, B et C sont visibles. Les textures [u,v] ont donc été calculées, ainsi que les résultats intermédiaires [a,b, c,d,e,g,h,i]. Le second point de vue de la figure 9 (à droite) requiert les pièces C et D et donc les textures [u,w]. La texture [w] peut être calculée très rapidement à partir du seul résultat intermédiaire [h], calculé au point de vue précédent. On voit donc bien que [h] est un excellent résultat intermédiaire à conserver en mémoire, puisqu'il permet de calculer à la fois [v] et [w] rapidement. De même, [c] est impliqué dans le calcul des trois textures résultats, et il est probable que l'on souhaite le conserver en mémoire.

Ceci fait apparaître la principale difficulté associée à l'idée de conserver les résultats intermédiaires : il faut déterminer quels résultats conserver ou non, et ce bien entendu en fonction de la mémoire de travail disponible. Par défaut tous les résultats intermédiaires sont conservés, et l'élimination des résultats les moins intéressants n'a lieu que lorsque le budget mémoire est dépassé.

Le budget mémoire peut être constant ou dynamique (c'est-à-dire réactualisé au besoin par l'application hôte). Donc à chaque fois qu'un résultat intermédiaire est jugé utile pour la suite des calculs, le générateur doit évaluer s'il est possible de conserver ce résultat vis-à-vis du budget mémoire. Plus généralement, cette problématique est récurrente durant toute la vie du résultat intermédiaire : dans le cas où un autre résultat intermédiaire plus intéressant doit être conservé « à sa place », ou bien dans le cas d'une diminution du budget mémoire fixé par l'application hôte.

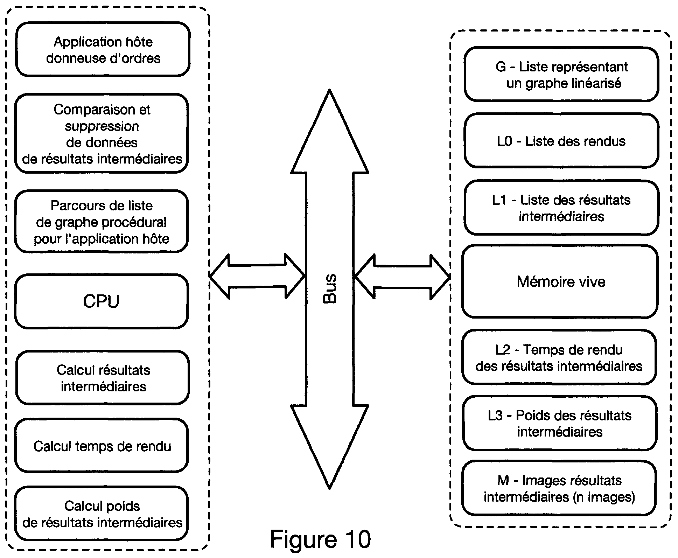

Un exemple de dispositif implémentant la présente invention est illustré schématiquement à la Figure 10. Ce dispositif se compose des parties suivantes :

- un organe de calcul (le CPU), chargé du parcours et de l'exécution du graphe, de la gestion du budget mémoire, de la détermination des résultats intermédiaires à supprimer lorsque le budget mémoire est dépassé ;
- une mémoire vive contenant les informations suivantes :

  a. une zone G contenant le graphe linéarisé, tel que représenté figure 2 ;
  b. une zone L0 contenant la liste des rendus présents dans la queue à exécuter ultérieurement ;
  c. une zone L1 contenant la liste des résultats intermédiaires ;
  d. une zone L2 contenant la liste des temps de rendu associés aux résultats intermédiaires déjà calculés ;
  e. une zone L3 contenant la liste des poids associés aux résultats intermédiaires conservés en mémoire à un instant donné (voir ci-dessous) ;
  f. une zone M contenant les résultats intermédiaires eux-mêmes, stockés sous forme de tableaux listant la valeur (luminosité ou couleur) de chaque pixel.

Le CPU est connecté à la mémoire vive par l'intermédiaire d'un bus et peut y lire et y écrire librement. Le CPU doit de plus être capable de mesurer le temps écoulé entre deux événements, que ce soit par l'intermédiaire de registres internes ou d'un périphérique externe (non représenté sur la figure 10. Lors du parcours du graphe, le temps consommé par l'exécution de chaque noeud est stocké dans la liste L2.

Comme indiqué précédemment, tous les résultats intermédiaires sont conservés par défaut, et c'est uniquement lors du dépassement du budget imparti que se pose le problème de la détermination des résultats à conserver ou à éliminer. L'invention proposée définit une stratégie de choix des résultats intermédiaires à éliminer afin de minimiser le temps nécessaire pour effectuer les éventuelles générations ultérieures des images résultats du même graphe.

Le moteur de génération d'images maintient en permanence une liste des résultats intermédiaires conservés en mémoire, ainsi qu'une liste de rendu contenant les requêtes envoyées par l'application hôte et non encore satisfaites. Le procédé selon la présente invention permet d'associer à chaque résultat intermédiaire une métrique composite (dénommée « poids » par la suite) qui va indiquer l'intérêt potentiel de la conservation de ce résultat intermédiaire pour la réduction du temps de génération des images ultérieures. Une fois que chaque résultat intermédiaire s'est vu attribuer un poids, la liste des résultats intermédiaires est triée par ordre de poids afin de supprimer les résultats les moins pertinents. La mesure des pertinences relatives de deux résultats intermédiaires est donnée par la comparaison de leur poids.

En particulier lorsque le budget mémoire va être dépassé, les noeuds sont supprimés par ordre de poids jusqu'à ce que l'occupation mémoire totale des résultats intermédiaires respecte le budget mémoire imposé.

Le choix de la méthode de calcul du poids de chaque résultat intermédiaire détermine le comportement du gestionnaire mémoire, ainsi que l'ordre de tri et de suppression des résultats intermédiaires. Dans tous les cas, il est important de prendre en compte les critères suivants :

- la taille occupée par l'image résultat en mémoire ;

- la quantité de calculs nécessaire afin de calculer ce résultat, qui représente le « coût » associé à la génération de ce résultat ;
- la distance temporelle avant la réutilisation du résultat intermédiaire, mesurée par la position de la première occurrence du résultat intermédiaire en cours d'évaluation dans la liste de rendu.

Le poids de chaque résultat intermédiaire peut donc être calculé à tout moment par une formule intégrant ces trois données. Un exemple d'une telle formule est donné ci-dessous :

$$f(t,e,r) = \frac{e}{k_0 t + k_1 r}$$

Les variables utilisées sont :

- $t$, la taille de l'image résultat, en octets ;
- $e$, le temps nécessaire au recalcul de ce résultat, mesuré en millisecondes ;
- $r$, l'index de la première occurrence du résultat intermédiaire dans la liste de rendu ($+\infty$ si le résultat intermédiaire n'est pas utilisé). Les constantes $k_0$ et $k_1$ sont déterminées empiriquement et définies à $k_0 = \frac{1}{1024}$ et $k_1 = 2$. Il est important de noter que le paramètre $r$ dépend de la liste de rendu, et doit donc être réévalué si la liste de rendu a été modifiée depuis le calcul du poids originel. La formule proposée satisfait les contraintes qu'une métrique de poids doit respecter dans le contexte de la présente invention : plus un résultat intermédiaire est long à calculer et plus son poids est élevé, ce qui signifie qu'il est à privilégier par rapport à un résultat intermédiaire que l'on peut recalculer plus rapidement, à occupations mémoire et dates de réutilisation égales. Plus un résultat intermédiaire prend de la place en mémoire et plus son poids est faible, ce qui signifie qu'en cas de budget mémoire dépassé, supprimer ce résultat intermédiaire est plus intéressant que supprimer un résultat plus léger, à temps de calcul et dates de réutilisation égaux plus un résultat intermédiaire est utilisé tardivement et plus son poids est faible, ce qui signifie qu'en cas de budget mémoire dépassé, il est moins important de conserver ce résultat qu'un autre qui serait réutilisé plus tôt dans la liste de rendu, à temps de calcul et occupations mémoire égaux.

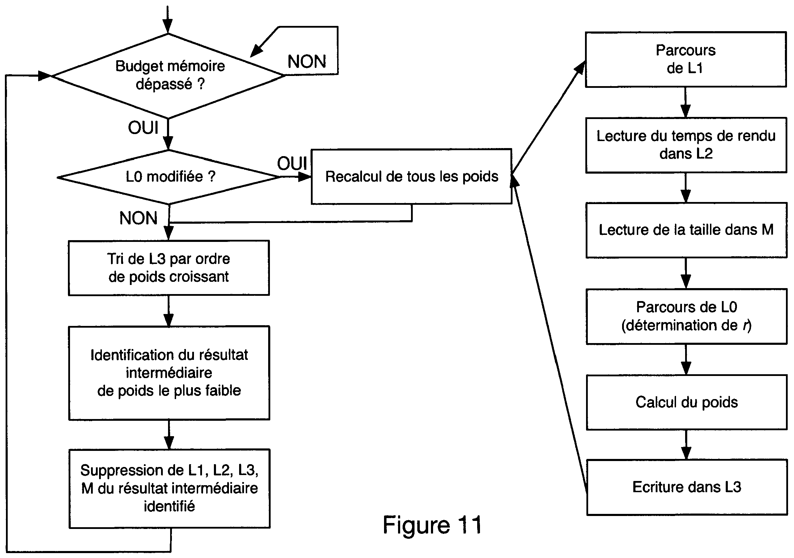

Cette formule associe un poids élevé aux résultats intermédiaires présentant un fort intérêt à être conservés en mémoire. Le tri de la liste des poids et la suppression des résultats intermédiaires est donc effectuée par ordre de poids croissant. Il est tout à fait possible d'envisager d'autres formulations du poids qui associent un poids faible aux résultats intermédiaires les plus intéressants. Dans ce cas, le tri de la liste et la suppression des résultats intermédiaires se font bien entendu par ordre de poids décroissants. Le procédé associé à un tel système est illustré à la figure 11.

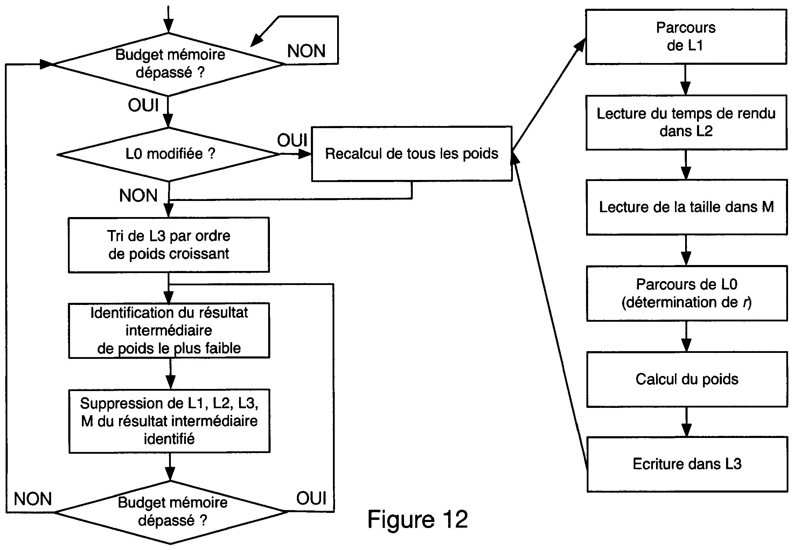

Il est possible d'envisager un processus d'élimination des résultats intermédiaires ne rebouclant pas jusqu'à la première étape du procédé illustré, et se contentant de supprimer le premier élément de la liste L3 triée tant que la somme des occupations mémoire des noeuds restant dans L3 est supérieure au budget mémoire imposé. Ainsi, les poids ne sont pas recalculés à chaque suppression de résultat intermédiaire. Cela introduit une incertitude sur le poids des résultats intermédiaires mais permet de diminuer le temps global pris par l'étape d'identification et de suppression des résultats intermédiaires en cas de dépassement du budget mémoire. Une telle optimisation est illustrée à la figure 12.

La mise en oeuvre des différents modules préalablement décrits (par exemple les modules de comparaison et suppression, de parcours, de calcul de résultats intermédiaires, de calcul de temps de rendu, de calcul de poids, etc) est avantageusement réalisée au moyen d'instructions de mise en oeuvre, permettant aux modules d'effectuer la ou les opérations spécifiquement prévues pour le module concerné. Les instructions peuvent être sous la forme d'un ou plusieurs logiciels ou modules de logiciels mis en oeuvre par un ou plusieurs microprocesseurs. Le ou les modules et/ou le ou les logiciels sont avantageusement prévus dans un produit programme d'ordinateur comprenant un support d'enregistrement ou médium d'enregistrement utilisable par un ordinateur et comportant un code programmé lisible par un ordinateur intégré dans ledit support ou medium, permettant à un logiciel applicatif son exécution sur un ordinateur ou autre dispositif comportant un microprocesseur.

## Revendications

1. Moteur de génération d'images susceptible de générer des images pour une application hôte à partir de données procédurales sous forme de graphes séquentiels comportant des noeuds simples, des noeuds de résultats intermédiaires et des noeuds de résultats finaux, comprenant :

   - au moins un microprocesseur ;
   - une liste d'instructions ;
   - un module de parcours de graphe procédural séquentiel de génération d'image, adapté pour recevoir d'une application hôte au moins un graphe G procédural séquentiel de génération d'image et pour parcourir ce graphe et au moins une liste LO de rendus contenant les requêtes d'images à générer reçue par l'application hôte et non encore satisfaites ;
   - un module de calcul de résultats intermédiaires, permettant de calculer des résultats intermédiaires correspondant à des noeuds du graphe procédural séquentiel de génération d'image ;
- un module de calcul de temps de rendu de résultats intermédiaires ;
- un module mémoire pour mémoriser le graphe G procédural séquentiel de génération d'image ;
- un module mémoire pour mémoriser la liste LO ;
- un module mémoire pour mémoriser une liste L1 de résultats intermédiaires ;
- un module mémoire pour mémoriser une liste L2 de temps de rendu des résultats intermédiaires ;

**caractérisé en ce qu'**il comprend par ailleurs :

- un module de calcul de poids des résultats intermédiaires permettant d'associer à chaque résultat intermédiaire un poids indiquant l'intérêt potentiel de la conservation de ce résultat intermédiaire pour la réduction du temps de génération des images ultérieures;
- un module mémoire pour mémoriser une liste L3 de poids des résultats intermédiaires ;
- un module mémoire pour mémoriser une liste M d'images résultats intermédiaires ;
- un module de comparaison et de suppression, permettant, une fois que chaque résultat intermédiaire s'est vu attribué un poids, de trier la liste L1 des résultats intermédiaires par ordre de poids afin de supprimer les résultats les moins pertinents.

**2.** Moteur de génération d'images selon la revendication 1, dans lequel le module de comparaison et de suppression est adapté pour comparer la capacité mémoire disponible pour la mémorisation de nouvelles données de résultats intermédiaires ou de données préalablement existantes à un seuil minimum donné, et pour supprimer des données de résultats intermédiaires si ladite capacité mémoire disponible pour la mémorisation de nouvelles données de résultats intermédiaires est inférieure audit seuil.

**3.** Procédé de génération d'images pour moteur de génération d'images selon l'une des revendications 1 ou 2, susceptible de générer des images à partir de données procédurales sous forme de graphes séquentiels comportant des noeuds simples, des noeuds de résultats intermédiaires et des noeuds de résultats finaux, dans lequel le moteur de génération d'images :

a) reçoit d'une application hôte au moins un graphe G procédural séquentiel de génération d'image et au moins une liste LO de rendus contenant les requêtes d'images à générer non encore satisfaites ;
b) établi une liste L1 de résultats intermédiaires pour stockage dans un module de liste de résultats intermédiaires ;
c) établi une liste L2 de temps de rendu des résultats intermédiaires pour stockage dans un module de liste de temps de rendu des résultats intermédiaires ;

**caractérisé en ce que** le moteur de génération d'images :

d) établi une liste L3 de poids des résultats intermédiaires permettant d'associer à chaque résultat intermédiaire un poids indiquant l'intérêt potentiel de la conservation de ce résultat intermédiaire pour la réduction du temps de génération des images ultérieures pour stockage dans un module de poids des résultats intermédiaires ;
e) établi une liste M d'images de résultats intermédiaires pour stockage dans un module d'images de résultats intermédiaires ; et
f) un module de comparaison et de suppression permet, une fois que chaque résultat intermédiaire s'est vu attribué un poids, de trier la liste L1 des résultats intermédiaires par ordre de poids afin de supprimer les résultats les moins pertinents.

**4.** Procédé de génération d'images selon la revendication 3, dans lequel le module de comparaison et de suppression :

f) procède à l'identification du résultat intermédiaire de poids le plus faible ;
g) procède à la suppression de données correspondant au résultat intermédiaire de poids le plus faible identifié ;
h) procède à la vérification de l'espace mémoire disponible ;
i) si l'espace mémoire disponible est supérieur à un seuil minimum donné, le module de comparaison et de suppression cesse la suppression de données ;
j) si l'espace mémoire disponible est encore au-dessous du seuil minimum donné, le module de comparaison et de suppression poursuit le procédé à l'étape « f », jusqu'à ce que l'espace mémoire disponible soit sous ledit seuil.

**5.** Procédé de génération d'images selon la revendication 3 ou 4, dans lequel le graphe est sous forme de liste avec indications des résultats intermédiaires prérequis à une étape donnée.

**6.** Procédé de génération d'images selon la revendication 5, dans lequel une modification de la liste L0 de rendus entraine un nouveau calcul des poids des résultats intermédiaires.

7. Procédé de génération d'images selon l'une des revendications 3 à 5, dans lequel le module de calcul de poids des résultats intermédiaires effectue un tri de poids par ordre de poids croissants.

8. Procédé de génération d'images selon l'une des revendications 3 à 7, dans lequel le résultat intermédiaire nouvellement obtenu avant l'étape de suppression de données est pris en compte dans l'étape d'identification du résultat intermédiaire de poids le plus faible.

9. Procédé de génération d'images selon l'une des revendications 3 à 8, dans lequel le module de calcul de résultats intermédiaires détermine les résultats intermédiaires en fonction de la liste L0 de rendus.

10. Procédé de génération d'images selon l'une des revendications 3 à 9, dans lequel le module de calcul de poids effectue les calculs de poids en considérant la taille occupée par l'image résultat en mémoire.

11. Procédé de génération d'images selon l'une des revendications 3 à 10, dans lequel le module de calcul de poids effectue les calculs de poids en considérant la quantité de calculs requis pour calculer ledit résultat intermédiaire.

12. Procédé de génération d'images selon l'une des revendications 3 à 11, dans lequel le module de calcul de poids effectue les calculs de poids en considérant la distance temporelle avant réutilisation dudit résultat intermédiaire.

13. Procédé de génération d'images selon l'une des revendications 3 à 12, dans lequel dans l'étape de suppression de données correspondant au résultat intermédiaire, le moteur de génération d'images effectue la suppression de données de l'image du résultat intermédiaire.

14. Procédé de génération d'images selon l'une des revendications 3 à 13, dans lequel dans l'étape de suppression de données correspondant au résultat intermédiaire, le moteur de génération d'images effectue la suppression de données parmi les listes L1, L2 et L3.

15. Procédé de génération d'images selon l'une des revendications 3 à 14, dans lequel une modification du niveau de seuil minimum de mémoire disponible entraine un nouveau calcul de poids.

**Patentansprüche**

1. Bilderzeugungsvorrichtung, welche Bilder für eine Hostanwendung aus Verfahrensdaten in der Form von Abfolge-Diagrammen mit einfachen Knoten, Zwischenergebnissknoten und Schlussergebnissknoten zu erzeugen vermag, umfassend:

- mindestens einen Mikroprozessor;
- eine Liste von Anweisungen;
- ein Abfolge-Verfahrensdiagramm-Durchlaufmodul für die Erzeugung von Bildern, angepasst für den Empfang aus einer Hostanwendung von mindestens einem Abfolge-Verfahrensdiagramm G für die Erzeugung von Bildern und das Durchlaufen dieses Diagramms, und von mindestens einer Liste LO von Renderings enthaltend die von der Hostanwendung erhaltenen Anträge für die Erzeugung von Bildern und welche noch nicht erfüllt worden sind;
- ein Modul zur Berechnung der Zwischenresultate, welches erlaubt, Zwischenresultate zu berechnen, welche Knoten des Abfolge-Verfahrensdiagramms für die Erzeugung von Bildern entsprechen;
- ein Modul zur Berechnung der Renderingzeiten von Zwischenresultaten;
- ein Speichermodul zur Speicherung des Abfolge-Verfahrensdiagramms G für die Erzeugung von Bildern;
- ein Speichermodul zur Speicherung der Liste LO;
- ein Speichermodul zur Speicherung einer Liste L1 von Zwischenresultaten;
- ein Speichermodul zur Speicherung einer Liste L2 von Renderingzeiten der Zwischenresultate;

**dadurch gekennzeichnet, dass** sie zudem umfasst:

- ein Modul zur Berechnung der Gewichtungen der Zwischenresultate, das erlaubt, jedem Zwischenresultat eine Gewichtung zuzuordnen, welches das potentielle Interesse zur Erhaltung dieses Zwischenresultats angibt, um die Erzeugungszeit für nachfolgenden Bilder zu reduzieren;
- ein Speichermodul zur Speicherung einer Liste L3 von Gewichtungen der Zwischenresultate;
- ein Speichermodul zur Speicherung einer Liste M von Zwischenresultatbildern;
- ein Vergleich- und Löschmodul, das es erlaubt, sobald jedem Zwischenresultat eine Gewichtung zugeordnet wurde, die Liste L1 von Zwischenresultaten in Reihenfolge der Gewichtung zu sortieren, um die am wenigsten relevanten Resultate zu löschen.

2. Bilderzeugungsvorrichtung gemäss Anspruch 1, worin das Vergleich- und Löschmodul angepasst ist, um die für das Speichern von neuen Zwischenresultatdaten oder vorher vorhandenen Daten an einem gegebenen Minimalschwellenwert verfügbare Speicherkapazität zu vergleichen, und für das Löschen von Zwischenresultatdaten, falls die besagte verfügbare Speicherkapazität für das Speichern von neuen Zwischenresultatdaten tiefer als der besagte Schwellenwert ist.

3. Verfahren für die Erzeugung von Bildern für Bilderzeugungsvorrichtung gemäss einem der Ansprüche 1 oder 2, welches Bilder aus Verfahrensdaten in der Form von Abfolge-Diagrammen mit einfachen Knoten, Zwischenergebnisknoten und Schlussergebnisknoten zu erzeugen vermag, worin die Bilderzeugungsvorrichtung:

a) mindestens ein Abfolge- Verfahrensdiagramm G für die Erzeugung von Bildern aus einer Hostanwendung empfängt und mindestens eine Liste LO von Renderings enthaltend die Anträge für die Erzeugung von Bildern, welche noch nicht erfüllt worden sind;
b) eine Liste L1 von Zwischenresultaten zur Speicherung in einem Zwischenresultaten-Listenmodul erstellt;
c) eine Liste L2 von Renderingzeiten der Zwischenresultate zur Speicherung in einem Modul von Renderingzeiten von Zwischenresultaten erstellt;
d) eine Liste L3 von Gewichtungen der Zwischenresultate erstellt, die es erlaubt, jedem Zwischenresultat eine Gewichtung zuzuordnen, welches das potentielle Interesse zur Erhaltung dieses Zwischenresultats angibt, um die Erzeugungszeit für die nachfolgenden Bilder zu reduzieren, zur Speicherung in einem Zwischenresultatgewichtungsmodul;
e) eine Liste M von Zwischenresultatbildern zur Speicherung in einem Zwischenresultatbildmodul erstellt; und
f) ein Vergleich- und Löschmodul es erlaubt, sobald jedem Zwischenresultat eine Gewichtung zugeordnet wurde, die Liste L1 von Zwischenresultaten in Reihenfolge der Gewichtung zu sortieren, um die am wenigsten relevanten Resultate zu löschen.

4. Bilderzeugungsverfahren gemäss Anspruch 3, worin das Vergleich- und Löschmodul:

f) die Identifizierung des Zwischenresultats mit der niedrigsten Gewichtung durchführt;
g) Daten, welche dem mit der niedrigsten Gewichtung identifizierten Zwischenresultat entsprechen, löscht;

h) die verfügbare Speicherkapazität überprüft;
i) falls die verfügbare Speicherkapazität grösser als ein gegebener Minimalschwellenwert ist, das Vergleich- und Löschmodul das Löschen von Daten unterbricht;
j) falls die verfügbare Speicherkapazität immer noch unter dem gegebenen Minimalschwellenwert liegt, das Vergleich- und Löschmodul den Prozess im Schritt "f" weiterführt, bis die verfügbare Speicherkapazität unter dem besagten Minimalschwellenwert ist.

5. Bilderzeugungsverfahren gemäss Anspruch 3 oder 4, worin das Diagramm in der Form einer Liste mit Angaben von an einem gegebenen Schritt vorausgesetzten Zwischenresultaten ist.

6. Bilderzeugungsverfahren gemäss Anspruch 5, worin eine Änderung der Liste L0 von Renderings zu einer neuen Berechnung der Gewichtungen der Zwischenresultate führt.

7. Bilderzeugungsverfahren gemäss einem der Ansprüche 3 bis 5, worin das Modul zur Berechnung von Zwischenresultaten eine Sortierung in aufsteigender Reihenfolge der Gewichtung durchführt.

8. Bilderzeugungsverfahren gemäss einem der Ansprüche 3 bis 7, worin das vor dem Datenlöschschritt neu erhaltene Zwischenresultat im Schritt des Identifizierens des Zwischenresultats mit der niedrigsten Gewichtung berücksichtigt wird.

9. Bilderzeugungsverfahren gemäss einem der Ansprüche 3 bis 8, worin das Modul zur Berechnung von Zwischenresultaten die Zwischenresultate entsprechend der Renderingliste L0 bestimmt.

10. Bilderzeugungsverfahren gemäss einem der Ansprüche 3 bis 9, worin das Modul zur Gewichtungsberechnung die Gewichtungsberechnungen unter Berücksichtigung des durch das Resultatbild im Speicher beanspruchten Platzes durchführt.

11. Bilderzeugungsverfahren gemäss einem der Ansprüche 3 bis 10, worin das Modul zur Gewichtungsberechnung die Gewichtungsberechnungen unter Berücksichtigung der Anzahl von für die Berechnung des besagten Zwischenresultats erforderlichen Berechnungen durchführt.

12. Bilderzeugungsverfahren gemäss einem der Ansprüche 3 bis 11, worin das Modul zur Gewichtungsberechnung die Gewichtungsberechnungen unter Berücksichtigung der Zeitdistanz vor der Wiederverwendung des besagten Zwischenresultats durchführt.

**13.** Bilderzeugungsverfahren gemäss einem der Ansprüche 3 bis 12, worin im Schritt des Löschens der dem Zwischenresultat entsprechenden Daten, die Bilderzeugungsvorrichtung das Löschen von Bilddaten aus dem Zwischenresultat durchführt.

**14.** Bilderzeugungsverfahren gemäss einem der Ansprüche 3 bis 13, worin im Schritt des Löschens der dem Zwischenresultat entsprechenden Daten, die Bilderzeugungsvorrichtung das Löschen von Daten aus den Listen L1, L2 und L3 durchführt.

**15.** Bilderzeugungsverfahren gemäss einem der Ansprüche 3 bis 14, worin eine Änderung im Minimalschwellenwert der verfügbaren Speicherkapazität zu einer neuen Gewichtungsberechnung führt.

**Claims**

**1.** Image generating engine capable of generating images for a host application from procedural data in the form of sequential graphs comprising simple nodes, intermediate result nodes and final result nodes, comprising:

> - at least one microprocessor;
> - a list of instructions;
> - a sequential procedural graph traversal module for generating images, adapted to receive from a host application at least one sequential procedural graph G for generating images and traversing this graph, and at least one list LO of renders containing the requests for images to be generated received by the host application and that have not yet been satisfied;
> - a module for calculating intermediate results, making it possible to calculate intermediate results corresponding to nodes of the sequential procedural graph for generating images;
> - a module for calculating rendering times of intermediate results;
> - a memory module for storing the sequential procedural graph G for generating images;
> - a memory module storing the list LO;
> - a memory module for storing a list L1 of intermediate results;
> - a memory module for storing a list L2 of rendering times of the intermediate results;

**characterized in that** it further comprises:

> - a module for calculating the weights of the intermediate results making it possible to associate to each intermediate result a weight indicating the potential interest for conserving this intermediate result to reduce the generation time of subsequent images;

> - a memory module for storing a list L3 of the weights of the intermediate results;
> - a memory module for storing a list M of intermediate result images;
> - a comparison and deletion module making it possible, once each intermediate result has been allocated a weight, for the list L1 of intermediate results to be sorted by weight order so as to suppress the least relevant results.

**2.** Image generating engine according to claim 1, wherein the comparison and deletion module is adapted for comparing the memory capacity available for storing new intermediate result data or preexisting data at a given minimum threshold, and for deleting intermediate result data if said available memory capacity for storing new intermediate result data is lower than said threshold.

**3.** Method for generating images for image generating engine according to one of the claims 1 or 2, capable of generating images from procedural data in the form of sequential graphs comprising simple nodes, intermediate result nodes and final result nodes, wherein the image generating engine:

> a) receives from a host application at least one sequential procedural graph G for generating images and at least one list LO of renders containing the requests for images to be generated that have not yet been satisfied;
> b) establishes a list L1 of intermediate results for storage in a module of lists of intermediate results;
> c) establishes a list L2 of rendering times of the intermediate results for storage in a module of lists of rendering times of intermediate results;

**characterized in that** the image generating engine:

> d) establishes a list L3 of weights of the intermediate results making it possible to associate to each intermediate result a weight indicating the potential interest for conserving this intermediate result for reducing the generation time of subsequent images for storage in an intermediate results weight module;
> e) establishes a list M of intermediate results images for storage in an intermediate results image module; and
> f) a comparison and deletion module makes it possible, once each intermediate result has been allocated a weight, for the list L1 of intermediate results to be sorted by weight order in order to suppress the least relevant results.

**4.** Image generation method according to claim 3, wherein the comparison and deletion module:

f) proceeds to the identification of the intermediate result with the lowest weight;

g) deletes data corresponding to the intermediate result identified with the lowest weight;

h) verifies the available memory space;

i) if the available memory space is greater than a given minimum threshold, the comparison and deletion module stops the deletion of data;

j) if the available memory space is still below the given minimum threshold, the comparison and deletion module continues the process in step "f" until the available memory space is below said minimum threshold.

5. Image generation method according to claim 3 or 4, wherein the graph is in the form of a list with indications of intermediate results prerequisite at a given step.

6. Image generation method according to claim 5, wherein a modification of the list L0 of renderings will result in a new calculation of the weights of the intermediate results.

7. Image generation method according to one of the claims 3 to 5, wherein the intermediate results weight calculation module performs weight sorting in increasing order of weight.

8. Image generation method according to one of the claims 3 to 7, wherein the intermediate result newly obtained prior to the data deletion step is taken into account in the step of identification of the intermediate result with the lowest weight.

9. Image generation method according to one of the claims 3 to 8, wherein the module for calculating intermediate results determines the intermediate results in accordance with the rendering list L0.

10. Image generation method according to one of the claims 3 to 9, wherein the weight calculation module performs the weight calculations taking into account the size used by the result image in the memory.

11. Image generation method according to one of the claims 3 to 10, wherein the weight calculation module performs the weight calculations taking into account the quantity of calculations required to calculate said intermediate result.

12. Image generation method according to one of the claims 3 to 11, wherein the weight calculation module performs the weight calculations taking into account the time distance before reusing said intermediate result.

13. Image generation method according to one of the claims 3 to 12, wherein in the step of deleting data corresponding to the intermediate result, the image generating engine performs the deletion of image data from the intermediate result.

14. Image generation method according to one of the claims 3 to 13, wherein in the step of deleting data corresponding to the intermediate result, the image generating engine performs the deletion of data from the lists L1, L2 and L3.

15. Image generation method according to one of the claims 3 to 14, wherein a change in the minimum threshold level of available memory results in a new weight calculation.

Figure 1

Figure 2

EP 2 599 053 B1

a  b  c  g  h

*temps*

Figure 3

a  b  c  g  h  i  j

Figure 4

Figure 5

Figure 6

EP 2 599 053 B1

Figure 7

Figure 8

Figure 9

EP 2 599 053 B1

Application hôte
donneuse d'ordres

Comparaison et
suppression
de données
de résultats intermédiaires

Parcours de liste
de graphe procédural
pour l'application hôte

CPU

Calcul résultats
intermédiaires

Calcul temps de rendu

Calcul poids
de résultats intermédiaires

Bus

G - Liste représentant
un graphe linéarisé

L0 - Liste des rendus

L1 - Liste des résultats
intermédiaires

Mémoire vive

L2 - Temps de rendu
des résultats intermédiaires

L3 - Poids des résultats
intermédiaires

M - Images résultats
intermédiaires (n images)

Figure 10

Parcours de L1

Lecture du temps de rendu dans L2

Lecture de la taille dans M

Parcours de L0 (détermination de $r$)

Calcul du poids

Ecriture dans L3

Recalcul de tous les poids

Budget mémoire dépassé ?

NON

OUI

L0 modifiée ?

OUI

NON

Tri de L3 par ordre de poids croissant

Identification du résultat intermédiaire de poids le plus faible

Suppression de L1, L2, L3, M du résultat intermédiaire identifié

Figure 11

Figure 12